# EUROPÄISCHE PATENTSCHRIFT

(11) **EP 0 784 524 B1**
(45) Veröffentlichungstag und Bekanntmachung des Hinweises auf die Patenterteilung: **13.12.2000**
(21) Anmeldenummer: 95931976.5
(22) Anmeldetag: 02.09.1995
(51) Int. Cl.: B23B 51/04

(54) **BOHRER MIT EINEM BOHRSPITZENTEIL**
DRILL WITH A DRILL POINT PART
FORET A POINTE RAPPORTEE

(30) Priorität: 07.10.1994 DE 4435857
(43) Veröffentlichungstag der Anmeldung: 23.07.1997
(73) Patentinhaber: KENNAMETAL INC., Latrobe, PA 15650 (US)
(72) Erfinder: KRENZER, Ulrich, D-90513 Zirndorf (DE); MÜLLER, Gebhard, D-90766 Fürth (DE); JÄGER, Horst, D-90461 Nürnberg (DE)
(74) Vertreter: Tergau & Pohl Patentanwälte
(86) Internationale Anmeldenummer: EP9503458
(87) Internationale Veröffentlichungsnummer: WO9611079

(56) Entgegenhaltungen:
- EP-A- 0 508 468

## Beschreibung

Die Erfindung betrifft einen Bohrer mit den im Oberbegriff des Anspruchs 1 aufgeführten Merkmalen. Ein solcher Bohrer ist aus EP-B1-172 148 bekannt. Bei diesem Bohrer ist das Bohrspitzenteil mehrteilig ausgebildet. Außerdem ist es durch radial die Schaftnut durchsetzende Spannschrauben gespannt.

Der Erfindung liegt die Aufgabe zugrunde, einen Bohrer der eingangs genannten Art mit einer hinsichtlich ihrer Wirksamkeit verbesserten und einfacher bedienbaren Spanneinrichtung zu versehen. Diese Aufgabe wird durch Anspruch 1 gelöst.

Die Lösung zeichnet sich durch "self grip"-Eigenschaften aus. Das Bohrspitzenteil braucht nur in die Schaftnut eingesetzt zu werden. Die Abmessungsrelationen zwischen der geklemmten Wandstärke des Bohrspitzenteils und dem Abstand zwischen den beiden Nutflanken sorgen für die Festigkeit der Spannung. In Vorschubrichtung des Bohrers wird das Bohrspitzenteil durch den Boden der Schaftnut abgestützt.

Eine Verbesserung der Spannung wird durch Anspruch 2 erzielt. Die in die zusätzlichen Führungsflächen eingeleiteten Klemmdruckkomponenten führen mit den von den Nutflanken ausgeübten Druckkomponenten zu resultierenden Druckkomponenten, durch die das Bohrspitzenteil insbesondere in den radial außenliegenden Bereichen an die Flankenwände der Schaftnut gepreßt wird.

Durch Anspruch 4 läßt sich das elastische Klemmdruckverhalten einstellen.

Anspruch 6 ist eine modifizierte Ausführungsform zur Lösung der Erfindungsaufgabe, die nicht oder weniger von dem Vorhandensein eines elastischen, von den Nutflanken auf den Bohrspitzeneinsatz ausgeübten Klemmdruckes abhängig ist. Hier kann der radiale, auf das Bohrspitzenteil einwirkende Klemmdruck durch axiale Verspannung des Bohrspitzenteils erzeugt oder unterstützt werden und für diese Lösung sind auch die zusätzlichen Führungsflächen nach Anspruch 2 nicht erforderlich, wenngleich solche auch vorteilhaft bei dieser Ausführungsform Anwendung finden können.

Anspruch 7 enthält eine Lösung für eine einfach zu bewerkstelligende Spannung des Bohrspitzenteils. Weitere Ausgestaltungsmerkmale sind Gegenstand der Ansprüche 8-11.

Der Gegenstand der Erfindung wird anhand von in den Figuren dargestellten Ausführungsbeispielen näher erläutert. Es zeigen:

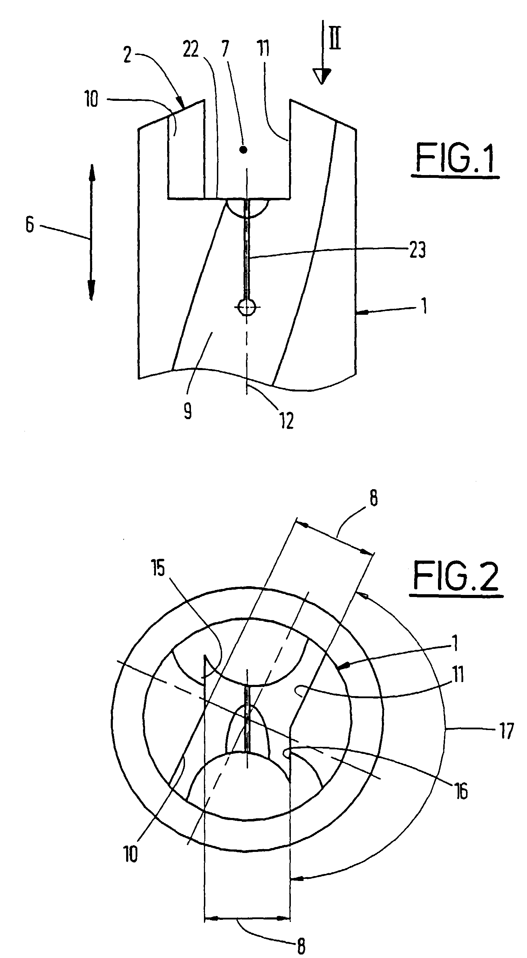

- Fig. 1: eine Seitenansicht des Bohrerschaftes einer ersten Ausführungsform,
- Fig. 2: eine Draufsicht in Richtung II von Fig. 1,

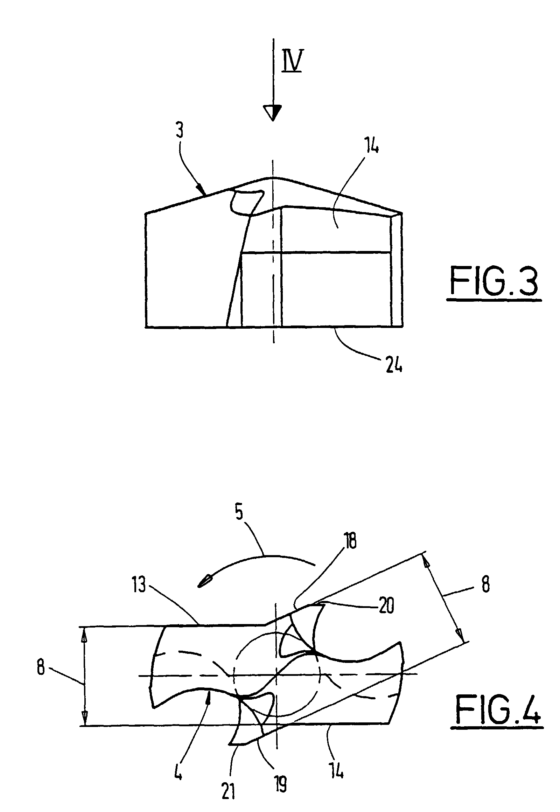

- Fig. 3: die Seitenansicht eines für den Einsatz in den Bohrerschaft nach Fig. 1 und 2 geeigneten Bohrspitzenteils,
- Fig. 4: eine Draufsicht entsprechend Pfeil IV in Fig. 3,

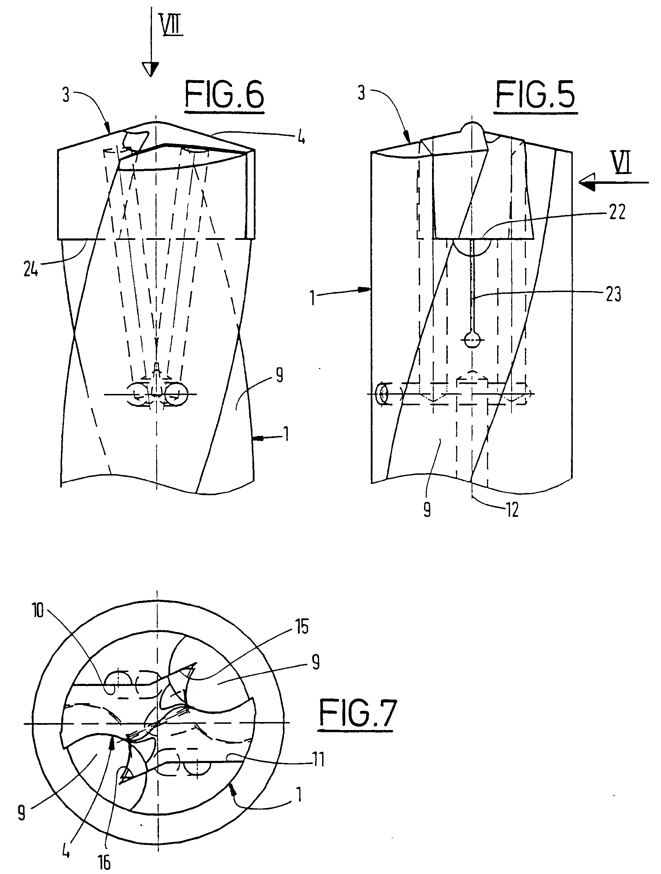

- Fig. 5: die Seitenansicht eines kompletten Bohrers mit einsitzendem Bohrspitzenteil analog der Ansicht in Fig. 1,
- Fig. 6: eine Seitenansicht entsprechend Pfeil VI in Fig. 5,
- Fig. 7: eine Draufsicht entsprechend Pfeil VII in Fig. 6,

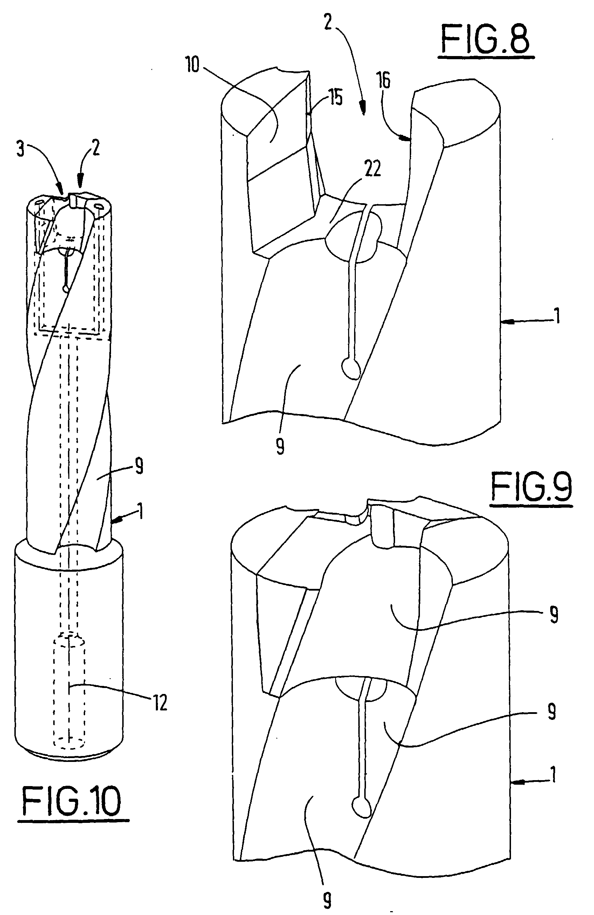

- Fig. 8: eine perspektivische Ansicht des bohrspitzenseitigen Endes des Bohrerschaftes,
- Fig. 9: eine Ansicht analog Fig. 8 des kompletten Bohrers mit einsitzendem Bohrspitzenteil,
- Fig. 10: die perspektivische Ansicht eines kompletten Bohrers der ersten Ausführungsform in Perspektivdarstellung,
- Fig. 11: die Seitenansicht - teilweise im Schnitt - einer zweiten Ausführungsform eines erfindungsgemäßen Bohrers,
- Fig. 12: eine Seitenansicht analog Fig. 11 ohne Teilschnitt,
- Fig. 13: eine Draufsicht entsprechend Pfeil XIII in Fig. 11,
- Fig. 14: die Seitenansicht eines Schaftes ohne einsitzendes Bohrspitzenteil analog Fig. 12,

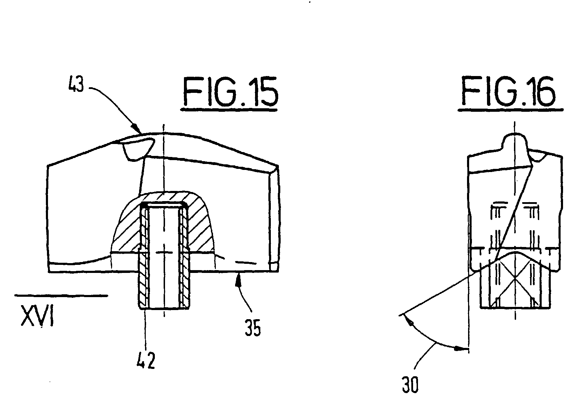

- Fig. 15: die Seitenansicht eines Bohrspitzenteils für die zweite Ausführungsform teilweise im Schnitt,
- Fig. 16: eine Seitenansicht in Pfeilrichtung XVI von Fig. 15,

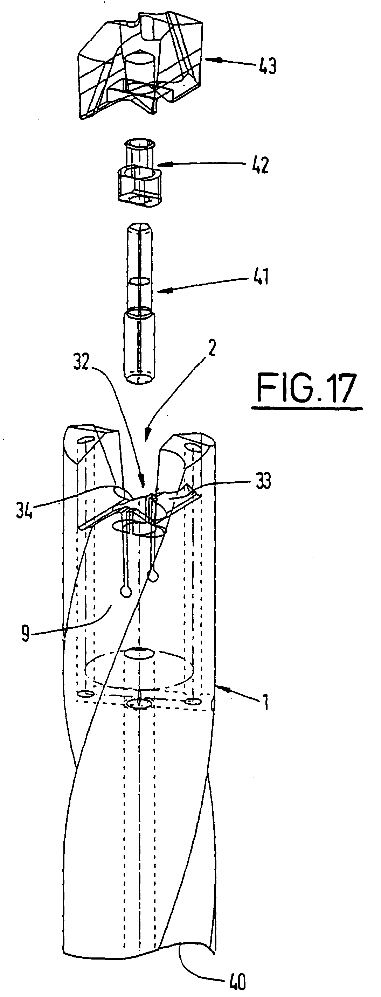

- Fig. 17: eine Explosivdarstellung der kompletten zweiten Ausführungsform,

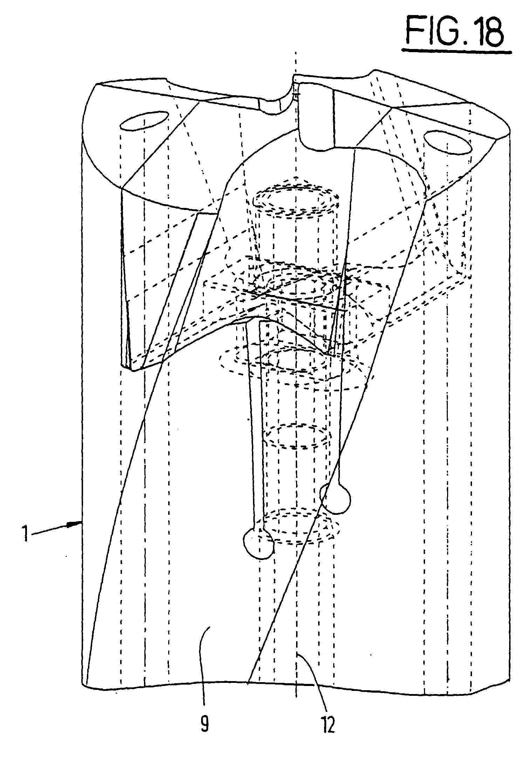

- Fig. 18: eine perspektivische Darstellung des kompletten Bohrers der zweiten Ausführungsform.

Der Bohrer besteht bei einer ersten Ausführungsform im wesentlichen aus dem Bohrerschaft 1 und dem in dessen Stirnende 2 eingesetzten Bohrspitzenteil 3. Das Bohrspitzenteil 3 ist vorzugsweise einstückig und es besteht aus Vollhartmetall. Es enthält die Bohrschneide 4. Das Bohrspitzenteil 3 ist im Betrieb in Drehrichtung 5 angetrieben.

Der Bohrerschaft 1 ist aus Werkzeugstahl gefertigt.

Das Stirnende 2 des Bohrerschaftes 1 ist von einer diametralen, sich mit seiner Ebene in Axialrichtung 6 des Schaftes 1 erstreckenden Schaftnut 7 der Nutbreite 8 versehen. Die Schaftnut 7 dient zur Aufnahme des Bohrspitzenteils 3. Sie enthält im Nutbereich weiter unten beschriebene Zentriermittel für das Bohrspitzenteil 3.

Der Bohrerschaft 1 trägt an seinem Umfang im wesentlichen in Axialrichtung 6 verlaufende und sich in den Bereich der Schaftnut 7 und in Richtung auf das Stirnende 2 erstreckende Spannuten 9. Die Spannuten 9 setzen sich bei dem kompletten Bohrer in dem Bereich des Bohrspitzenteils 3 in Richtung auf dessen Schneide 4 fort. Die Flanken 10,11 der Schaftnut 7 sind wenigstens teilweise zueinander und zur Schaftachse 12 parallel ausgerichtet.

Das Bohrspitzenteil 3 ist mit seinen den Nutflanken 10,11 entsprechenden und diesen entgegenstehenden Seitenflächen 13,14 infolge elastischen, von den Nutflanken 10,11 ausgeübten Druckes mittels eines Steck-Klemm-Sitzes in der Schaftnut 7 kraftschlüssig geklemmt.

In Radialrichtung zwischen den Flanken 10,11 der Schaftnut 7 und den Spannuten 9 ist je eine zusätzliche, in etwa radialer Richtung nach außen zurückspringende Führungsfläche 15,16 angeordnet, die im wesentlichen parallel zur Schaftachse 12 des Bohrers verläuft und einen stumpfen Winkel 17 mit den Nutflanken 10,11 bildet. Das Bohrspitzenteil 3 weist an den Führungsflächen 15,16 entsprechende und entgegenstehende Gegenführungsflächen 18,19 an dementsprechend etwa radial nach außen vorstehenden Schultern 20,21 auf. Das Bohrspitzenteil 3 ist mit diesen Schultern 20,21 zusätzlich zwischen den Gegenführungsflächen 18,19 kraftschlüssig geklemmt. Der stumpfe Winkel 17 beträgt etwa 150-160°.

Der Bohrerschaft 1 ist etwa mittig parallel zur Schaftnut 7 und ausgehend vom Nutboden 22 in Axialrichtung 6 geschlitzt (Schlitz 23). Die in Axialrichtung 6 gemessene Tiefe des Schlitzes 23 dient zur Abstimmung des radial nach innen gerichteten Federungsverhaltens der Nutflanken 10,11 bzw. der ihnen zugeordneten Führungsflächen 15,16. Der Boden 22 der Schaftnut 7 verläuft etwa rechtwinklig zur Schaftachse 12. Das Bohrspitzenteil 3 ist mit seiner entsprechend ebenen Bodenfläche 24 auf dem Nutboden 22 abgestützt.

Wenn in den Figurendarstellungen der dem Nutboden 22 zugewandte Bereich der Nutflanken 10,11 bzw. der Führungsflächen 15,16 eine leicht in Richtung auf den Nutboden 22 konvergierende Ausrichtung aufweist, so widerspricht dies nicht der Wesentlichkeit der Parallelität der Nutflanken 10,11 und der Führungsflächen 15,16 zueinander und zur Schaftachse 12 und auch nicht der entsprechenden Ausrichtung der Gegenflächen am Bohrspitzenteil 3. Diese konvergierende Ausrichtung dient nämlich jedenfalls beim Bohrspitzenteil 3 zur Erleichterung des Einsetzens.

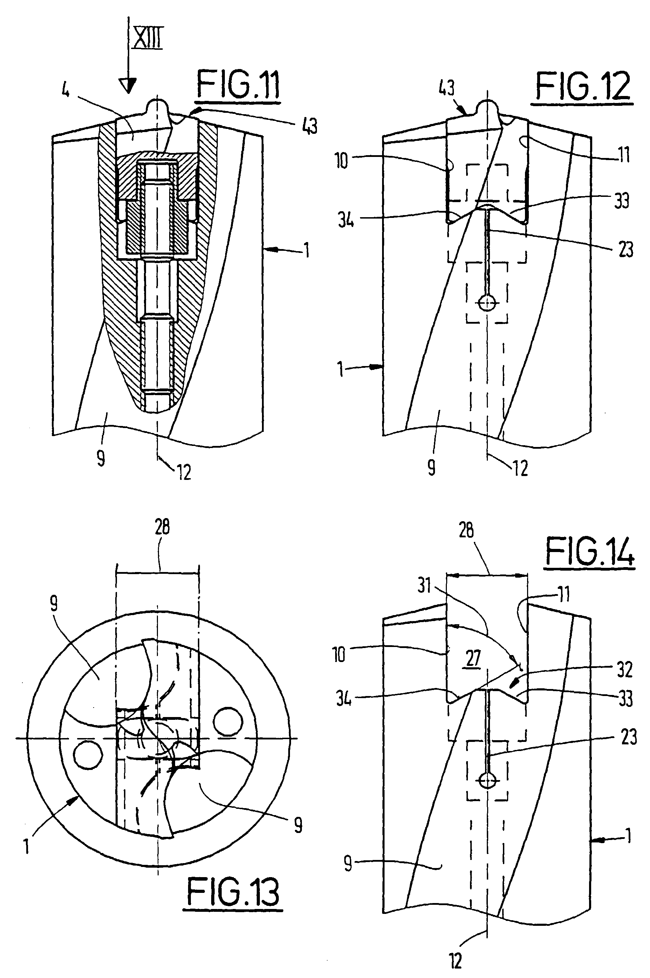

Bei der zweiten Ausführungsform gemäß den Fig. 11 ff weist die Schaftnut 7 mit ihrer Nutbreite 28 eine Konfiguration analog der Schaftnut 7 bei der ersten Ausführungsform auf. Die Nut trägt hier das Bezugszeichen 27. Auch bei dieser Ausführungsform ist der Bohrerschaft 1 etwa mittig parallel zur Schaftnut 27 und ausgehend vom Nutboden in Axialrichtung 6 geschlitzt (Schlitz 23). Bei dieser Ausführungsform steigt der Nutboden 32 ausgehend von den Nutflanken 10,11 in Richtung radial nach innen auf den Axialschlitz 23 beidseitig an und bildet dadurch eine Dachform mit den Bodenteilflächen 33,34. Die Bodenfläche 35 des Bohrspitzenteils 43 ist entsprechend der Dachform des Nutbodens 32 mit einem geringfügig kleineren Firstwinkel 30 als der Dachschrägenwinkel 31 des Nutbodens 32 ausgemuldet.

Das Bohrspitzenteil 43 ist in Axialrichtung 6 derart gegen den Nutboden 32 verspannt, insbesondere verschraubt, daß der Spanndruck einen gegeneinander gerichteten Klemmdruck auf die Flanken 10,11 der Schaftnut 27 ausübt. Zur Spannung des Bohrspitzenteils dient eine zur Schaftachse 12 etwa koaxiale, den Schaftschlitz 23 durchsetzende und mit ihrem Schraubgewinde in das Bohrspitzenteil 43 eingreifende, vom unteren bzw. hinteren Schaftende 40 her bedienungsmäßig zugängliche Fixierschraube 41. Sie kann als Schloßschraube ausgebildet sein. In das Bohrspitzenteil 43 ist zweckmäßig ein Gewindeträger 42 kraft- oder stoffschlüssig eingebracht, weil das unmittelbare Einformen eines Befestigungsgewindes in ein Hartmetallteil problematisch sein kann. Der Gewindeträger 42 ist bei dem Ausführungsbeispiel als im Nutboden 32 verzapfbarer Axialansatz des Bohrspitzenteils 43 ausgebildet und dient als radiales Zentrierteil für das Bohrspitzenteil 43. Auch die Fixierschraube 41 kann als solches Fixierteil dienen.

## Patentansprüche

1. Bohrer mit einem
- die Bohrschneide (4) enthaltenden,
- insbesondere einstückig aus Vollhartmetall bestehenden und
- am Stirnende (2) aus einem Werkzeugstahl gefertigten Bohrerschaft (1) abnehmbar fixierten
Bohrspitzenteil (3),
- wobei das Stirnende (2) des Bohrerschaftes (1) von einer diametralen, sich mit seiner Ebene in Axialrichtung (6) des Schaftes (1) erstreckenden Schaftnut (7) zur Aufnahme des Bohrspitzenteils (3) durchsetzt ist und im Nutbereich Zentrierungsmittel für das Bohrspitzenteil (3) enthält,
- wobei der Bohrerschaft (1) an seinem Umfang im wesentlichen in Axialrichtung verlaufende und sich in den Bereich der Schaftnut (7) hinein erstreckende Spannuten (9) trägt,
-- die sich in den Bereich des Bohrspitzenteils (3) zu dessen Schneide hin fortsetzen und
- wobei die Flanken (10,11) der Schaftnut (7) mindestens teilweise zueinander und zur Schaftachse (12) parallel ausgerichtet sind,
dadurch gekennzeichnet,
daß das Bohrspitzenteil (3) mit seinen den Nutflanken (10,11) entsprechenden und entgegenstehenden Seitenflächen (13,14) infolge elastischen, von den Nutflanken (10,11) ausgeübten Druckes mittels eines Steck-Klemm-Sitzes in der Schaftnut (7) kraftschlüssig geklemmt ist und daß der Bohrerschaft (1) etwa mittig parallel zur Schaftnut (7) und ausgehend vom Nutboden (22) in Axialrichtung (6) einen Schlitz (23) aufweist.

2. Bohrer nach Anspruch 1,
dadurch gekennzeichnet,
- daß in Radialrichtung zwischen den Flanken (10,11) der Schaftnut (7) und den Spannuten (9) je eine zusätzliche, in etwa radialer Richtung nach außen zurückspringende Führungsfläche (15,16) angeordnet ist, die
-- im wesentlichen parallel zur Bohrerschaftachse (12) verläuft und
-- einen stumpfen Winkel (17) mit den Nutflanken (10,11) bildet,
- daß das Bohrspitzenteil (3) den Führungsflächen (15,16) entsprechende und entgegenstehende Gegenführungsflächen (18,19) an dementsprechend radial nach außen vorstehenden Schultern (20,21) aufweist und
- daß das Bohrspitzenteil (3) mit diesen Schultern (20,21) zusätzlich zwischen den Gegenführungsflächen (18,19) kraftschlüssig geklemmt ist.

3. Bohrer nach Anspruch 2,
dadurch gekennzeichnet,
daß der stumpfe Winkel (17) etwa 150°-160° beträgt.

4. Bohrer nach einem oder mehreren der vorhergehenden Ansprüche,
gekennzeichnet durch
eine zur Abstimmung des Federungsverhaltens der Nutflanken (10,11) bzw. der ihnen zugeordneten Führungsflächen (15,16) festgelegte, sich in Axialrichtung (6) erstreckende Schlitztiefe.

5. Bohrer nach einem oder mehreren der vorhergehenden Ansprüche,
dadurch gekennzeichnet,
daß der Boden (22) der Schaftnut (7) etwa rechtwinklig zur Schaftachse (12) verläuft und daß das Bohrspitzenteil (3) mit seiner entsprechend ebenen Bodenfläche (24) auf dem Nutboden (22) abgestützt ist.

6. Bohrer nach Anspruch 1,
dadurch gekennzeichnet,
- daß der Nutboden (32) ausgehend von den Nutflanken (10,11) in Richtung radial nach innen auf den Axialschlitz (23) beidseitig ansteigt und dadurch etwa eine Dachform bildet,
- daß die Bodenfläche (35) des Bohrspitzenteils (43) mit einem geringfügig kleineren Firstwinkel (30) einer Dachform ausgemuldet ist und
- daß das Bohrspitzenteil (43) in Axialrichtung am Bohrerschaft derart gegen den Schlitz (23) verspannt, insbesondere verschraubt ist,
-- daß der Spanndruck einen gegeneinander gerichteten Klemmdruck auf die Flanken (10,11) der Schaftnut (27) ausübt.

7. Bohrer nach Anspruch 6,
gekennzeichnet durch
eine zur Schaftachse (12) etwa koaxiale, den Schaftschlitz (23) durchsetzende und mit ihrem Schraubgewinde in das Bohrspitzenteil (43) eingreifende, vom hinteren Schaftende her bedienungsmäßig zugängliche Fixierschraube (41).

8. Bohrer nach Anspruch 7,
gekennzeichnet durch
eine Zugankerschraube als Fixierschraube (41).

9. Bohrer nach einem oder mehreren der vorhergehenden Ansprüche,
gekennzeichnet durch
einen kraft- oder stoffschlüssig in das Bohrspitzenteil eingebrachten Gewindeträger (42).

10. Bohrer nach einem oder mehreren der vorhergehenden Ansprüche,
gekennzeichnet durch
einen im Nutboden (32) verzapfbaren Axialansatz am Bohrspitzenteil (43) als radiales Zentrierteil.

11. Bohrer nach Anspruch 9,
gekennzeichnet durch
den Gewindeträger (42) als Zentrierteil.

## Claims

1. Drill having a drilling-point part (3) which
- contains the drilling cutting edge (4),
- is made in particular in one piece of solid carbide, and
- is detachably fixed to the front end (2) of a drill shank (1) produced from tool steel,
- a diametral shank groove (7) for receiving the drilling-point part (3), which extends with its plane in the axial direction (6) of the shank (1) passing through the front end (2) of the drill shank (1), and the front end (2) containing centring means for the drilling-point part (3) in the groove region,
- the drill shank (1) having flutes (9) running on its circumference essentially in the axial direction and extending into the region of the shank groove (7),
-- which flutes (9) continue into the region of the drilling-point part (3) up to its cutting edge, and
- the flanks (10, 11) of the shank groove (7) being oriented at least partly parallel to one another and to the shank axis (12),
characterized in that the drilling-point part (3), with its side faces (13, 14) corresponding to and opposite the groove flanks (10, 11), is frictionally clamped in the shank groove (7) as a result of elastic pressure, exerted by the groove flanks (10, 11), by means of a push-in clamp fit, and in that the drill shank (1) has a slot (23) approximately centrally parallel to the shank groove (7) and starting from the groove base (22) in the axial direction (6).

2. Drill according to Claim 1, characterized
- in that in each case an additional guide surface (15, 16) set back outwards approximately in the radial direction is arranged in the radial direction between the flanks (10, 11) of the shank groove (7) and the flutes (9), which guide surface (15, 16)
-- runs essentially parallel to the drill-shank axis (12) and
-- forms an obtuse angle (17) with the groove flanks (10, 11),
- in that the drilling-point part (3) has mating guide surfaces (18, 19), corresponding to and opposite the guide surfaces (15, 16), on shoulders (20, 21) correspondingly projecting radially outwards, and
- in that the drilling-point part (3) is additionally frictionally clamped with these shoulders (20, 21) between the mating guide surfaces (18, 19).

3. Drill according to Claim 2, characterized in that the obtuse angle (17) is about 150°-160°.

4. Drill according to one or more of the preceding claims, characterized by a slot depth which is established for setting the spring behaviour of the groove flanks (10, 11) or of the guide surfaces (15, 16) assigned to them and extends in the axial direction (6).

5. Drill according to one or more of the preceding claims, characterized in that the base (22) of the shank groove (7) runs approximately at right angles to the shank axis (12), and in that the drilling-point part (3) is supported with its correspondingly flat base surface (24) on the groove base (22).

6. Drill according to Claim 1, characterized
- in that the groove base (32), starting from the groove flanks (10, 11), rises on both sides radially inwards to the axial slot (23) and thereby approximately forms a roof shape,
- in that the base surface (35) of the drilling-point part (43) is hollowed out with a slightly smaller ridge angle (30) of a roof shape, and
- in that the drilling-point part (43) is restrained, in particular screwed, in the axial direction on the drill shank with respect to the slot (23) in such a way
-- that the gripping pressure exerts an oppositely directed clamping pressure on the flanks (10, 11) of the shank groove (27).

7. Drill according to Claim 6, characterized by a fixing screw (41) which is approximately coaxial to the shank axis (12), passes through the shank slot (23) and engages with its screw thread in the drilling-point part (43) and is accessible for manipulation from the rear shank end.

8. Drill according to Claim 7, characterized by a tie-rod screw as fixing screw (41).

9. Drill according to one or more of the preceding claims, characterized by a thread carrier (42) introduced into the drilling-point part in a frictional or integral manner.

10. Drill according to one or more of the preceding claims, characterized by an axial extension, which can be dowelled in the groove base (32), on the drilling-point part (43) as a radial centring part.

11. Drill according to Claim 9, characterized by the thread carrier (42) as centring part.

## Revendications

1. Foret, comprenant une pointe de foret (3)
- qui contient les tranchants de foret (4),
- qui est constituée en particulier d'une seule pièce en métal dur et plein, et
- qui est fixée de façon amovible à l'extrémité frontale (2) d'une tige de foret (1) réalisée en acier à outils,
dans lequel l'extrémité frontale (2) de la tige de foret (1) est traversée par une gorge (7) diamétrale, s'étendant avec son plan en direction axiale (6) de la tige (1) et destinée à recevoir la pointe de foret (3), et ladite extrémité frontale contient dans la zone de la gorge des moyens de centrage pour la pointe de foret (3),
dans lequel la tige de foret (1) porte à sa périphérie des gorges à copeaux (9) dirigées sensiblement en direction axiale et s'étendant dans la région de la gorge (7) de la tige, lesdites gorges à copeaux se prolongeant dans la région de la pointe de foret (3) en direction de ses tranchants, et
dans lequel les flancs (10, 11) de la gorge (7) de tige sont dirigés parallèlement au moins partiellement l'un par rapport à l'autre et par rapport à l'axe (12) de la tige,
caractérisé
en ce que la pointe du foret (3) est coincée par coopération de forces dans la gorge (7) de la tige au moyen d'un blocage par enfichage/coincement en raison de la pression élastique exercée par les flancs (10, 11) de la gorge, de par ses faces latérales (13, 14) opposées et correspondantes aux flancs (10, 11) de la gorge,
et en ce que la tige (1) du foret comporte une fente (23) approximativement au milieu et parallèle à la gorge (7) de la tige et en direction axiale (6) partant du fond (22) de la gorge.

2. Foret selon la revendication 1,
caractérisé
en ce que, en direction radiale entre les flancs (10, 11) de la gorge (7) de la tige et les gorges à copeaux (9) il est prévu une surface de guidage additionnelle respective (15, 16) formant un ressaut vers l'extérieur approximativement en direction radiale, ladite surface
- s'étendant sensiblement parallèle à l'axe de la tige (12) de la tige du foret, et
- formant un angle obtus (17) avec les flancs (10, 11) de la gorge, en ce que la pointe de foret (3) présente des surfaces de guidage complémentaires (18, 19) opposées et correspondant aux surfaces de guidage (15, 16), sur des épaulements (20, 21) qui dépassent de façon correspondante radialement vers l'extérieur,
et en ce que la pointe de foret (3) est coincée par coopération de forces additionnellement avec ces épaulements (20, 21) entre les surfaces de guidage complémentaires (18, 19).

3. Foret selon la revendication 2,
caractérisé en ce que l'angle obtus (17) s'élève à environ 150 à 160°.

4. Foret selon l'une ou plusieurs des revendications précédentes, caractérisé par le fait que la fente présente une profondeur en direction axiale (6) fixée en vue d'ajuster le comportement élastique des flancs (10, 11) de la gorge, ou respectivement des surfaces de guidage (15, 16) qui leur sont associées.

5. Foret selon l'une ou plusieurs des revendications précédentes,
caractérisé en ce que le fond (22) de la gorge (7) de la tige s'étend approximativement à angle droit par rapport à l'axe (12) de la tige, et en ce que la pointe de foret (3) s'appuie sur le fond (22) de la gorge par sa surface de fond plane correspondante (24).

6. Foret selon la revendication 1,
caractérisé :
- en ce que le fond (32) de la gorge monte sur les deux côtés en partant des flancs (10, 11) de la gorge en direction radiale vers l'intérieur vers la fente axiale (23) et produit une forme analogue à une toiture,
- en ce que la surface (35) de fond de la pointe de foret (43) présente un creux avec une forme analogue à une toiture présentant un angle au sommet (30) légèrement plus petit,
- et en ce que la pointe de foret (43) est serrée, en particulier vissée, en direction axiale sur la tige de foret et contre la fente (23) de telle manière que la pression de serrage exerce sur les flancs (10, 11) de la gorge (27) de la tige des pressions de coincement dirigées en sens opposé.

7. Foret selon la revendication 6,
caractérisé par une vis de fixation (41)
- approximativement coaxiale à l'axe (12) de la tige,
- traversant la fente (23) de la tige,
- engagée par son filetage dans la pointe de foret (43), et
- accessible pour son actionnement depuis l'extrémité postérieure de la tige.

8. Foret selon la revendication 7,
caractérisé par une vis d'ancrage de traction à titre de vis de fixation (41).

9. Foret selon l'une ou plusieurs des .revendications précédentes,
caractérisé par un porte-filetage (42) intégré par coopération de forces ou par coopération de matière dans la pointe de foret.

10. Foret selon l'une ou plusieurs des revendications précédentes,
caractérisé par un talon axial, susceptible d'être monté dans le fond (32) de la gorge, sur la pointe de foret (43) à titre de pièce de centrage radial.

11. Foret selon la revendication 9,
caractérisé par le porte-filetage (42) à titre de pièce de centrage.
